# EUROPÄISCHE PATENTSCHRIFT

(11) **EP 2 667 996 B1**
(45) Veröffentlichungstag und Bekanntmachung des Hinweises auf die Patenterteilung: **13.12.2017**
(21) Anmeldenummer: 12701134.4
(22) Anmeldetag: 26.01.2012
(51) Int. Cl.: B23K 9/04, B22D 11/128, B23K 35/30, C22C 9/01, B23K 5/18, C23C 26/02, F16C 13/00, F16C 33/12

(54) **ROLLE ZUM FÜHREN UND/ODER STÜTZEN EINES STRANGS EINER STRANGGIESSANLAGE MIT EINER DURCH AUFTRAGSCHWEISSEN ERZEUGTEN SCHICHT ; VERFAHREN ZUM HERSTELLEN EINER SOLCHEN ROLLE UND VERWENDUNG EINER SOLCHEN ROLLE**
ROLLER FOR GUIDING AND/OR SUPPORTING A STRAND IN A CONTINUOUS CASTING INSTALLATION HAVING A LAYER PRODUCED BY BUILD-UP WELDING ; PROCESS OF PRODUCING SUCH A ROLLER AND USE OF SUCH ROLL
ROULEAU DESTINÉ AU GUIDAGE ET/OU AU SUPPORT D'UN PRODUIT DE COULÉE CONTINUE D'UNE INSTALLATION DE COULÉE CONTINUE, POURVU D'UNE COUCHE GÉNÉRÉE PAR SOUDAGE DE RECHARGEMENT ; PROCÉDÉ DE FABRICATION D'UN TEL ROULEAU ET UTILISATION D'UN TEL ROULEAU

(30) Priorität: 26.01.2011 EP 11152288
(43) Veröffentlichungstag der Anmeldung: 04.12.2013
(73) Patentinhaber: voestalpine Stahl GmbH, 4020 Linz (AT)
(72) Erfinder: MIESBAUER, Josef, A-4191 Vorderweißenbach (AT)
(74) Vertreter: Jell, Friedrich
(86) Internationale Anmeldenummer: PCT/EP2012/051255
(87) Internationale Veröffentlichungsnummer: WO 2012/101225

(56) Entgegenhaltungen:
- WO-A1-2009/130079
- CN-A- 101 347 893
- DE-A1- 19 900 942
- DE-C1- 4 027 224
- FR-A- 1 296 257
- GB-A- 1 522 859

## Beschreibung

### Technisches Gebiet

Die Erfindung betrifft eine Rolle zum Führen und/oder Stützen eines Strangs einer Stranggießanlage gemäß dem Oberbegriff des Anspruchs 1 (siehe WO2009/130079A), ein Verfahren zum Herstellen einer solchen Rolle (Anspruch 7) und die Verwednung solch einer Rolle (Anspruch 13).

### Stand der Technik

Aus dem Stand der Technik ist bekannt (WO2009/130079A), eine Schutzschicht über einen Grundkörper einer Rolle mit Hilfe eines Auftragsschweißens eines Schweißwerkstoffs aus einer Eisenlegierung zu schaffen. Mit solch einer eine Rollfläche ausbildenden Schicht kann zwar eine hohe Härte und damit erhöhte Standfestigkeit der Rolle gegenüber mechanischen Belastungen durch den Strang der Stranggießanlage erreicht werden, nachteilig wurde jedoch festgestellt, dass diese Panzerschicht im Nahbereich der Kokille der Stranggießanlage einem erhöhten Verschleiß unterliegt. Untersuchungen zeigten Beschädigungen an der Rollfläche durch Risse und Abplatzungen der Panzerschicht, was in Kombination mit dem dadurch entstehenden unrunden Rollenlauf zusätzlich zu einer Beschleunigung der Verschleißwerte führte. Derartige Rollen sind daher im kokillennahen Bereich der Strangführung beispielsweise als Fuß- bzw. auch im Anfangsbereich der Biegezone nicht geeignet. Insbesondere diese der Kokille nahe Rollen müssen jedoch besonders standfest sein, weil damit der Gießspalt festgelegt wird und verschlissene Rollen zu erheblichen Walzbelastungen auf die anschließenden Rollen führen können.

Weiter ist bei Rollen bekannt (CN101347893), auf einen, einen Eisenwerkstoff aufweisenden Grundkörper eine heterogene Aluminiumbronze mit 7,5-9,5% Aluminium aufzuschweißen. Diese Aluminiumbronze kann sich zwar gegenüber anderen Kupferlegierungen durch erhöhte Festigkeit und dennoch vergleichsweise gute Wärmeleitfähigkeit auszeichnen. Für Rollen zum Führen und/oder Stützen eines Strangs einer Stranggießanlage, wo vergleichsweise widrige Umstände vorherrschen können, ist solch eine Aluminiumbronze als Schutzschicht aber nur bedingt geeignet.

### Darstellung der Erfindung

Die Erfindung hat sich daher die Aufgabe gestellt, eine Rolle mit einer auftragsgeschweißten heterogenen Aluminiumbronze zum Führen und/oder Stützen eines Strangs einer Stranggießanlage der eingangs geschilderten Art auf konstruktiv einfache Weise derart zu verbessern, dass selbst im Nahbereich der Kokille der Stranggießanlage eine hohe Standfestigkeit gewährleistet werden kann.

Hierzu ist die Rolle zum Führen und/oder Stützen eines Strangs einer Stranggießanlage gemäß Anspruch 1 definiert. Anspruch 7 definiert ein Verfahren zur Herstellung solch einer Rolle und Anspruch 13 definiert die Verwendung solch einer Rolle.

Ist die heterogene Aluminiumbronze mehrphasig ausgebildet, kann eine hervorragende Schutzschicht geschaffen werden. Es kann sich nämlich herausstellen, dass mit Hilfe solch einer Auftragsschweißverbindung eine mit dem Grundköper vollflächige und sohin besonders feste Verbindung zwischen Schicht und Grundkörper geschaffen werden kann. Diese Art der Schweißverbindung kann zusätzlich auch durch eine Aufmischung - wenngleich gering - für einen verbesserten Temperaturübergang zwischen Schicht und Grundkörper sorgen. Zudem kann auch vorteilhaft eine gleichmäßigere Temperaturverteilung über die Schicht erreicht werden. Dabei kann insbesondere der vergleichsweise hohe Al-Anteil dieser heterogenen Mehrphasenlegierung (mit Al > 10 Massen%) einen fest haftenden und gut schützenden Oxidfilm (Cu₂O sowie Al₂O₃ enthaltend) ausbilden, der gerade im Nahbereich der Kokille für eine besonders hohe Korrosionsbeständigkeit der Rolle sorgen kann. Dort treten nämlich im Gegensatz zu weiter abgelegenen Rollenbereichen der Biegezone vergleichsweise hohe chemische Belastungen durch aggressive Gießschlacke in Verbindung mit Spritzwasser auf. Außerdem kann eine heterogene Mehrphasenlegierung mit Al > 10 Massen% eine vergleichsweise gute Resistenz gegenüber Spannungsrisskorrosion (SpRK-Resistenz) bieten, was vor allem bei Stranggießrollen von Bedeutung ist, weil hier stets mit Zugspannungen auf die Schicht bzw. die Rolle zu rechnen ist. Die Mehrphasenlegierung kann nämlich neben der α-Phase und γ₂-Phase auch aufgrund der Wärmebehandlung durch das Auftragsschweißen zu martensitischen Phasen (β', β'₁ und/oder γ'₁) führen, was eine chemisch und mechanisch besonders widerstandsfähige Schicht ermöglichen kann. Insbesondere deren martensitische Phase (β') kann hier deutlich festigkeitssteigernd wirken. Eine austenitische Phase (γ₂) soll unter Umständen vermieden werden, um nicht die Wärmeleitfähigkeit zu verringern bzw. eine erhöhte Bruchgefahr in Kauf nehmen zu müssen. Vorzugsweise wird das Auftragsschweißen derart vorgenommen, dass ein vergleichsweise hoher Grad an martensitischen Phasen im Gefüge auftritt. Die erfindungsgemäße Rolle kann daher selbst im Nahbereich der Kokille standfest einsetzbar sein, weil sie einerseits mechanisch höchst belastbar und dennoch ausreichend wärmeleitfähig sein kann.

Weist die Aluminiumbronze zu Cu (Kupfer) und Al wenigstens ein weiteres Legierungselement auf, insbesondere Ni (Nickel), Fe (Eisen) und/oder Mn (Mangan), kann die Standfestigkeit der Rolle dadurch weiter verbessert werden. Aufgrund der weiteren Legierungszusätze Ni, Fe bzw. Mn können nämlich zusätzliche Verbesserungen in der Widerstandsfähigkeit erreicht werden. So kann beispielsweise die Korrosionsbeständigkeit verbessert werden, was vorzugsweise bei mehrphasiger Aluminiumbronze von Vorteil ist. Ni kann auch zur Verbesserungen der Dauerschwingfestigkeit genutzt werden, um mechanische Belastungsausschläge aufgrund unregelmäßiger Strangoberflächen abzufangen. Der Legierungsbestandteil Mn kann außerdem zur Erhöhung der Warmfestigkeit herangezogen werden, um den höheren Temperaturen im Nahbereich der Kokille standhalten zu können, wobei über den Legierungsanteil Fe auch die Kornfeinung des Gefüges und die Festigkeit der Schicht verbessert werden kann. Im Allgemeinen konnte festgestellt werden, dass mit den Legierungselementen Fe und Ni die Korrosionsbeständigkeit und mit den Legierungselementen Mn, Ni und Fe die Festigkeit der Schicht noch weiter verbessert werden können.

Weist die Schicht wenigstens teilweise eine Ausnehmung auf seiner Rollfläche auf, dann kann die Temperaturverteilung an der Rollfläche vergleichmäßigt werden. Die Ausnehmungen können nämlich in Form von Strömungskanälen zum Ableiten von Kühlflüssigkeit bzw. zur Ausgasung eventueller Gasbildungen für eine verbesserte Wärmeableitung im Kontaktbereich mit dem Strang genützt werden. Außerdem können diese Ausnehmungen als Art Kühlrippen eine erhöhte Wärmeabgabe durch eine vergrößerte Oberfläche gewährleisten. Des Weiteren können diese Ausnehmungen die Möglichkeit eröffnen, unterschiedliche Wärmeausdehnungen von Schicht und Grundkörper abzufangen, sodass die Rollen eine hohe Laufruhe und Standfestigkeit aufweisen können. Konstruktiv einfach kann die Ausnehmung als wenigstens eine die Rollfläche umlaufende Rille ausgebildet sein. Auf diese Weise kann also außerdem eine Art Kühlnut geschaffen werden.

Der Zusammenhalt von Schicht und Grundkörper kann erheblich verbessert werden, wenn der Grundkörper einen geneigt zur Laufrichtung zick-zack verlaufenden Einbrand, der auch als u-förmige Nut bezeichnet werden kann, aufweist, an den die Schicht anschließt. Über derart verlaufende Nuten kann nämlich eine zur Rollbelastung normale Komponente in der Abstützung erzeugt werden, was zu erhöhter mechanischer Belastbarkeit führen kann.

Wird eine heterogene mehrphasige Aluminiumbronze als Schweißwerkstoff auftragsgeschweißt, dann können sich erleichterte Verfahrensbedingungen ergeben, weil diese Aluminiumbronze einen Legierungsanteil an Al größer 10 Massen% aufweist. Damit kann beispielsweise auch bei höheren Graden der Aufmischung zwischen Grundmaterial und Schweißwerkstoff immer noch ein heterogenes mehrphasiges Schichtgefüge und eine standfeste Rolle geschaffen werden. Vorteilhaft kann nämlich bei diesem Auftragsschweißen stets sichergestellt werden, dass sich eine martensitische bzw. martensitähnliche Phase in der Schicht ausbildet, die für eine erhebliche Festigkeitssteigerung der Rolle sorgen kann. Das Verfahren kann daher nicht nur einfach reproduzierbar, sondern auch vergleichsweise einfach handhabbar werden, insbesondere weil ein Verfahrensschritt genügt, den Grundkörper ausreichend zu beschichten. Diese Vorteile können auch bei einer Instandsetzung einer Rolle genützt werden.

Vorzugsweise ist die Aluminiumbronze mehrstofflegiert, insbesondere zusätzlich wenigstens ein Legierungselement Ni, Fe und/oder Mn aufweisend. Damit kann unter anderem die Schweißfähigkeit weiter verbessert werden. Insbesondere kann sich dabei Mn auszeichnen, um damit die Aufmischung von Schweißwerkstoff und Werkstoff des Grundköpers mit dem Eisenwerkstoff zu beruhigen. Dies ist insbesondere dann von Vorteil, wenn der Grundkörper aus einem Stahlwerkstoff besteht. Für ein Auftragsschweißen hat sich als besonders vorteilhaft herausgestellt, wenn der Schweißwerkstoff aus Al 7,8 bis 16 Massen%, Ni max. 8 Massen%, Fe max. 5 Massen%, Mn max. 2 Massen%, herstellungsbedingten Verunreinigungen sowie aus einem Rest an Massen% Cu besteht. Neben einem schnellen Schweißvorgang können damit auch Fehler in der Aufschweißung vermindert werden. Weitere Vereinfachungen beim Auftragsschweißen hinsichtlich eines zu hohen Grads an Aufmischung zeigten sich, wenn die Schicht wenigstens im Bereich ihrer Rollfläche aus Al 10 bis 14 Massen%, Ni 3 bis 7 Massen%, Fe max. 2 Massen%, Mn max. 2 Massen%, herstellungsbedingten Verunreinigungen sowie aus einem Rest an Massen% Cu besteht.

Es muss nicht weiter erwähnt werden, dass die Legierungen in der Zusammensetzung eine Streubreite aufweisen können. Solch eine Streubreite der einzelnen Legierungsanteile kann sich beispielsweise in ein 1/20 vom Ausgangswert bewegen.

Besonders hohe Standfestigkeit kann mit einer Schicht aus Al 11,5 Massen%, Ni 4,8 Massen%, Fe 2 Massen%, Mn 1 Massen%, herstellungsbedingten Verunreinigungen sowie aus einem Rest an Massen% Cu erreicht werden. Insbesondere der vergleichsweise hohe Legierungsanteil an Al und Ni zeigte eine bevorzugte mechanische Eigenschaft hinsichtlich Korrosions- und Verschleißfestigkeit. Die Bildung von Hotspots an der Rolloberfläche konnte ebenso verhindert werden, was eine besonders standfeste Rolle ermöglichen kann.

Einfache Verfahrensbedingungen können sich ergeben, wenn die Schweißraupe beim Auftragsschweißen wenigstens teilweise einem zick-zack Verlauf folgend aufgetragen wird. Außerdem kann durch diese Art der Auftragung eine besonders gleichmäßige Auftragsschweißung sichergestellt werden.

Um eine durchgehende sowie auch eine gleichmäßige Schicht zu gewährleisten, kann vorgesehen sein, dass beim Auftragsschweißen die Schweißraupe mit der bereits aufgeschweißten Schweißraupe überlappend, insbesondere mindestens 3 mm überlappend, aufgeschweißt wird.

Die Verwendung kann verbessert werden, wenn der Schweißwerkstoff aus Al 7,8 bis 16 Massen%, Ni max. 8 Massen%, Fe max. 5 Massen%, Mn max. 2 Massen%, herstellungsbedingten Verunreinigungen sowie aus einem Rest an Massen% Cu besteht. Weitere Verbesserungen konnten ermöglicht werden, wenn die Schicht wenigstens im Bereich ihrer Rollfläche aus Al 10 bis 14 Massen%, Ni 3 bis 7 Massen%, Fe max. 2 Massen%, Mn max. 2 Massen%, herstellungsbedingten Verunreinigungen sowie aus einem Rest an Massen% Cu besteht.

Insbesondere hat sich dabei die Verwendung einer Aluminiumbronze, bestehend aus Al 11,5 Massen%, Ni 4,8 Massen%, Fe 2 Massen%, Mn 1 Massen%, herstellungsbedingten Verunreinigungen sowie einem Rest an Massen% Cu ausgezeichnet, weil damit einfache Verfahrensbedingungen beim Auftragsschweißen und auch sicher martensitische Schichtstrukturen geschaffen werden können.

### Kurze Beschreibung der Zeichnung

In den Figuren ist beispielsweise der Erfindungsgegenstand anhand eines Ausführungsbeispiels näher dargestellt. Es zeigen
- Fig. 1.: eine abgerissene Schnittansicht auf eine Rolle,
- Fig. 2: eine abgerissene Längsansicht der Rolle nach Fig. 1,
- Fig. 3: eine abgerissene Längsansicht der teilweise dargestellten Rolle beim Auftragsschweißen auf deren Grundkörper und
- Fig. 4: eine abgerissene Schnittansicht der Rolle vor einem Rückdrehen der Auftragsschweißung der Rolle nach Fig. 3.

### Weg zur Ausführung der Erfindung

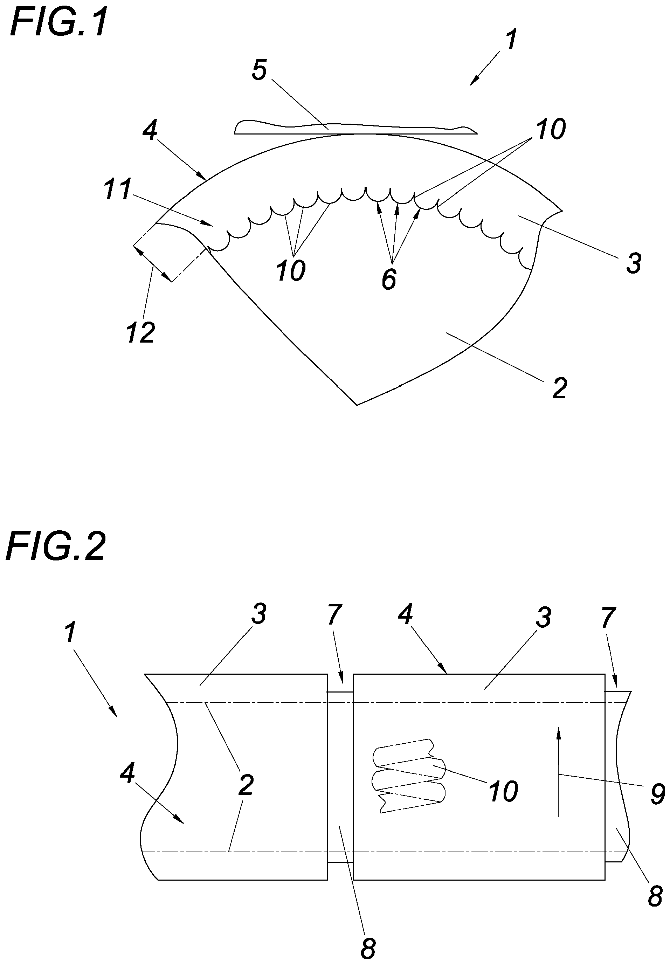

Gemäß Fig. 1 ist beispielsweise ein Ausführungsbeispiel zu einer Rolle 1 dargestellt, die aus einem Grundkörper 2 und einer darauf aufgebrachten Schicht 3 besteht. Die Rolle formt eine Rollfläche 4 zum Führen und/oder Stützen eines Strangs 5 einer Stranggießanlage aus, welche Stranggießanlage nicht näher dargestellt worden ist. Außerdem weist der Grundkörper 2 einen Eisenwerkstoff und die Schicht 3 eine Aluminiumbronze auf. Um nun eine besonders standfeste Verbindung zwischen der Schicht 3 und dem Grundkörper 2 sicherstellen zu können, wird vorgeschlagen, dass der Grundkörper 2 von einer Schicht 3 abgedeckt wird, die über eine Auftragsschweißverbindung 6 mit dem Grundkörper 2 stoffschlüssig verbunden ist. Es ist daher durch die Auftragsschweißverbindung 6 sichergestellt, dass die Schicht 3 mit dem Grundkörper 2 vollflächig verbunden ist, um so neben der Verbindungsfestigkeit zusätzlich einen hohen Wärmeleiteintrag in den Grundkörper 2 zu gewährleisten. Außerdem kann mit der Auftragsschweißverbindung 6 auf einfache Weise eine vollständige Abdeckung des Grundkörpers 2 gegenüber der Rollfläche 4 mit einer Schicht 3 sichergestellt werden, sodass eine standfeste und kostengünstige Rolle geschaffen werden kann. Diese Aluminiumbronze sorgt für höhere Festigkeitswerte.

Um die Gefahr des Auftretens an Hotspots an der Rollfläche der Schicht 3 zu verringern, weist die Rollfläche 4 Ausnehmungen 7 auf, die als die Rollfläche 4 umlaufende Rillen 8 ausgeführt sind, wie diese in der Fig. 2 entnommen werden können. Diese Rillen ragen nicht bis zum Grundkörper 2 vor, um damit die schützende Schicht 3 im Bereich der Rollfläche 4 nicht zu unterbrechen.

Gemäß der Fig. 2 ist ebenso zu erkennen, dass der Grundkörper 2 geneigt zu seiner Laufrichtung 9 zick-zack verlaufenden Einbrand bzw. u-förmige Nut 10 aufweist. Die von der Schicht 3 überdeckten Nuten 10 können für erhöhte Verbindungskräfte sorgen. Der Grundkörper schließt also über die Nuten 10 an die Schicht 3 an.

Zwischen dem Grundkörper 2 und der Schicht 3 besteht eine geringe Materialaufmischung 11. In die Schichtdicke 12 der Schicht 3 kann daher ein erhöhter Anteil an Eisenwerkstoff vermieden werden, um so eine erhöhte Korrosionsanfälligkeit der Schicht zu vermieden. Außerdem kann durch eine geringe Materialaufmischung 11 ein gleichmäßiges Schichtgefüge für eine hohe Standfestigkeit der Rolle 1 sichergestellt werden.

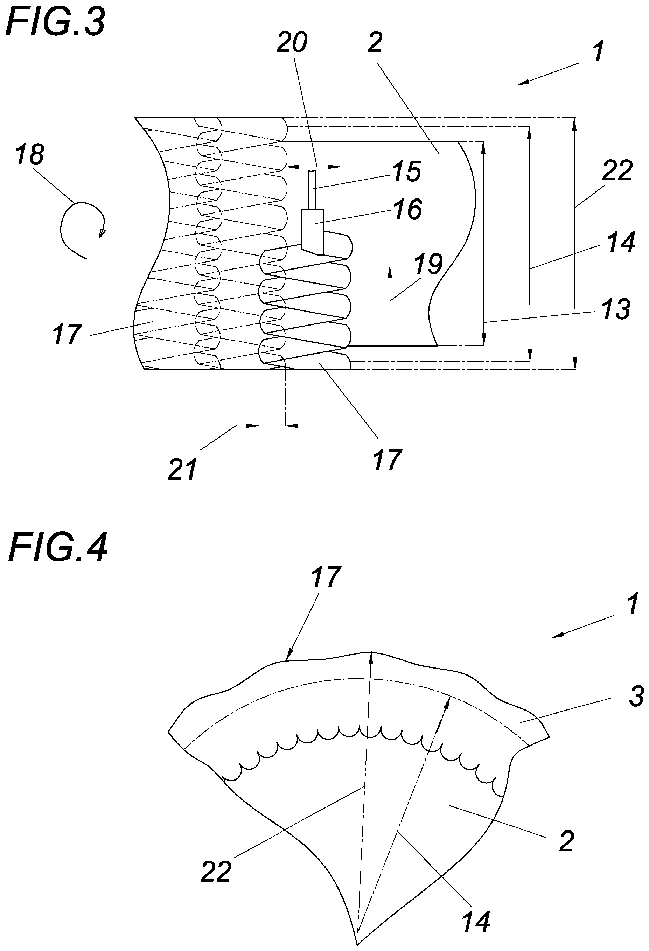

Anhand der Figuren 3 und 4 wird nun das erfindungsgemäße Verfahren zur Herstellung oder Instandsetzung einer Rolle 1 beispielsweise dargestellt. Zunächst wird ein Grundkörper 2 auf ein Untermaß 13 gegenüber dem zu erreichenden Sollmaß 14 der Rolle 1 abgedreht. Es versteht sich von selbst, dass hier vom Durchmesser gesprochen wird. Dieser Verfahrensschritt ist meist bei einer Instandsetzung einer Rolle 1 durchzuführen, um die verschlissenen Schichten von der Rolle 1 vollständig abtragen zu können. Bei einer neu zu schaffenden Rolle 1 kann bereits ein, auf Untermaß 13 gefertigter Grundkörper 2 verwendet werden, wobei jedoch ein Abdrehen auf Untermaß 13 vorstellbar ist. Bevorzugt wird ein Untermaß 13 von 3 Millimeter (mm) zum Sollmaß 14. Der Grundkörper 2 weist einen Eisenwerkstoff (Fe) auf, wobei dieser Grundkörper 2 vorzugsweise aus einem Stahlwerkstoff besteht. Baustahl S355, CrMo-legierter Vergütungsstahl 25CrMo4 und 42CrMo4 seien beispielsweise genannt. Auf diesem Grundkörper 2 wird nun eine schützende Schicht 3 durch ein Auftragsschweißen vorgesehen - und zwar wird für hervorragende chemische und mechanische Beständigkeit ein aus einer heterogenen Aluminiumbronze bestehender Schweißwerkstoff 15 als Fülldraht mit 1,6mm Durchmesser mit einem Brenner 16 auf den Grundkörper 2 auftragsgeschweißt. Vorzugsweise wird dieses Auftragsschweißen unter Gasschutz durchgeführt, was in den Figuren nicht näher dargestellte wird. Durch dieses Auftragsschweißen und ein anschließendes Abkühlen kann ein besonders vorteilhaftes Gefüge geschaffen werden, insbesondere wenn heterogene mehrphasige Aluminiumbronze verwendet wird, um damit die Festigkeit der Schicht deutlich zu erhöhen.

Gemäß Fig. 3 ist ersichtlich, dass die Schweißraupe 17 beim Auftragsschweißen wenigstens teilweise einem zick-zack Verlauf folgend aufgetragen wird. Zu diesem Zweck wird die Rolle 1 in Rotation 18 versetzt, um damit einen Vorschub in Schweißrichtung 19 für den, eine Pendelbewegung 20 ausführenden Brenner 16 zu schaffen. Damit kann mit einem Verfahrensschritt eine einlagige Schweißraupe 17 auf dem Grundkörper 2 aufgetragen werden, was erfindungsgemäß ausreichend ist, um eine standfeste Rolle 1 zu schaffen.

Beim Aufschweißen wird eine Überlappung 21 der Schweißraupen 17 verfahrensgemäß durchgeführt, um damit eine geschlossene Schicht 3 über dem Grundkörper 2 sicherstellen zu können. Bevorzugt wird eine Überlappung 21 von mindestens 3 mm. Die Parameter beim vorzugsweise stechenden Aufschweißen werden weiter derart eingestellt, dass eine geringe Aufmischung 11 des Materials des Grundkörpers 2 der Rolle 1 eintritt. Damit kann beispielsweise ein vorbestimmbares Gefüge der Schicht ermöglicht werden, was sich durch martensitische Phasen und damit besondere Härte auszeichnen kann. Die heterogene mehrphasige Aluminiumbronze mit einem Legierungsanteil an Al größer 10 Massen% gewährleistet nämlich auch bei höheren Graden der Aufmischung martensitische Phasen (β', β'₁ und/oder γ'₁) im Eutektoid. Ein derart eingestelltes Auftragsschweißen kann somit reproduzierbar für eine hohe Standfestigkeit der Rolle mit vergleichsweise lange gleich bleibenden Rollparametern sorgen.

Mit Hilfe des Auftragsschweißens wird auf den Grundkörper 2 eine das Sollmaß 14 überschreitende Schicht 3 aufgetragen. Vorzugsweise wird auf das Untermaß eine 6 bis 7mm dicke Schicht 3 aufgetragen. Das so entstehende Übermaß 22 wird dann durch Abdrehen auf das Sollmaß 14 gebracht, um eine glatte Rollfläche 4 für den Strang 5 ausbilden zu können. Anschließend werden Ausnehmungen 7 in die Rollfläche 4 eingebracht, um damit Rillen 8 zur Erhöhung der Standfestigkeit der Rolle 1 schaffen zu können.

Als bevorzugter Schweißwerkstoffs 15 hat sich Aluminiumbronze mit eine Legierungszusammensetzung von Al 11,5 Massen%, Ni 4,8 Massen%, Fe 2 Massen%, Mn 1 Massen%, herstellungsbedingten Verunreinigungen sowie aus einem Rest an Massen% Cu herausgestellt. Mit dieser Legierung konnte der Verschleiß am Durchmesser der Schicht 3 um über 80% gegenüber Rollen mit bekannten Panzerschichten verringert werden. Außerdem konnte mit der erfindungsgemäßen Schicht 3 eine Härte nach Rockwell von 180 bis 240 nach Skale C (180 bis 240 HRC) geschaffen werden, was insbesondere auf die legierungsbedingte martensitische bzw. martensitähnliche Phase im Gefüge der Schicht 3 zurückgeführt werden kann. Weiter hat sich als positiv der vergleichsweise hohe Ni-Anteil herausgestellt. Damit konnte eine verbesserte Wechselbelastungsfähigkeit des Gefüges ermöglicht werden, was die Standfestigkeit der Rolle beim Führen und/oder Stützen eines Strangs einer Stranggießanlage erhöhen konnte. Hinzu kommt, dass mit dem vergleichsweise hohen Al Anteil auch Probleme beim Auftragsschweißen aufgrund einer Aufmischung gering gehalten werden konnte, sodass stets eine martensitischen Phase garantiert und damit eine vergleichsweise hohe Festigkeit der Schicht erreicht werden konnte.

## Patentansprüche

1. Rolle zum Führen und/oder Stützen eines Strangs (5) einer Stranggießanlage mit einem einen Eisenwerkstoff aufweisenden Grundkörper (2) und mit einer eine Rollfläche (4) für den Strang (5) ausbildenden Schicht (3), wobei die Schicht (3) mit dem Grundkörper (2) über eine Auftragsschweißverbindung (6) mit dem Grundkörper (2) stoffschlüssig verbunden ist, **dadurch gekennzeichnet, dass** die Schicht (3) eine heterogene mehrphasige Aluminiumbronze aufweist, und dass die heterogene mehrphasige Aluminiumbronze Al > 10 Massen% aufweist.

2. Rolle nach Anspruch 1, **dadurch gekennzeichnet, dass** die Aluminiumbronze zu Cu und Al wenigstens ein weiteres Legierungselement, insbesondere Ni, Fe und/oder Mn, aufweist.

3. Rolle nach Ansprüche 1 oder 2, **dadurch gekennzeichnet, dass** die Schicht (3) wenigstens teilweise eine Ausnehmung (7) auf seiner Rollfläche (4), insbesondere wenigstens eine die Rollfläche (4) umlaufende Rille (8), aufweist.

4. Rolle nach einem der Ansprüche 1 bis 3, **dadurch gekennzeichnet, dass** der Grundkörper (2) geneigt zu seiner Laufrichtung (9) zick-zack verlaufenden Einbrand (10) aufweist, an den die Schicht (3) anschließt.

5. Rolle nach einem der Ansprüche 1 bis 4, **dadurch gekennzeichnet, dass** die Aluminiumbronze aus
| | |
|---|---|
| Al | 10 bis 14 Massen%, |
| Ni | bis 8 Massen%, vorzugsweise 3 bis 7 Massen%, |
| Fe | max. 5 Massen%, vorzugsweise max. 2 Massen%, |
| Mn | max. 2 Massen%, |
herstellungsbedingten Verunreinigungen sowie aus einem Rest an Massen% Cu besteht.

6. Rolle nach Anspruch 5, **dadurch gekennzeichnet, dass** die Aluminiumbronze aus
| | |
|---|---|
| Al | 11,5 Massen%, |
| Ni | 4,8 Massen%, |
| Fe | 2 Massen%, |
| Mn | 1 Massen%, |
herstellungsbedingten Verunreinigungen sowie aus einem Rest an Massen% Cu besteht.

7. Verfahren zur Herstellung oder Instandsetzung einer Rolle (1) nach einem der Ansprüche 1 bis 6, bei dem auf einem einen Eisenwerkstoff, insbesondere Stahlwerkstoff, aufweisenden Grundkörper (2) eine Schicht (3) durch ein Auftragsschweißen mit einem Schweißwerkstoff (15) auftragsgeschweißt wird, der aus einer heterogenen mehrphasigen Aluminiumbronze besteht, **dadurch gekennzeichnet, dass** eine heterogene mehrphasige Aluminiumbronze mit Al > 10 Massen% als Schweißwerkstoff (15) auftragsgeschweißt wird.

8. Verfahren nach Anspruch 7, **dadurch gekennzeichnet, dass** die vorzugsweise mehrstofflegierte Aluminiumbronze, insbesondere aufweisend zusätzlich wenigstens ein Legierungselement Ni, Fe und/oder Mn, einen Legierungsanteil an Al größer 10 Massen% aufweist.

9. Verfahren nach Anspruch 7 oder 8, **dadurch gekennzeichnet, dass** der Schweißwerkstoff (15) aus
| | |
|---|---|
| Al | 10 bis 14 Massen%, |
| Ni | bis 8 Massen%, vorzugsweise 3 bis 7 Massen%, |
| Fe | max. 5 Massen%, vorzugsweise max. 2 Massen%, |
| Mn | max. 2 Massen%, |
herstellungsbedingten Verunreinigungen sowie aus einem Rest an Massen% Cu besteht.

10. Verfahren nach Anspruch 9, **dadurch gekennzeichnet, dass** der Schweißwerkstoff (15) aus
| | |
|---|---|
| Al | 11,5 Massen%, |
| Ni | 4,8 Massen%, |
| Fe | 2 Massen%, |
| Mn | 1 Massen%, |
herstellungsbedingten Verunreinigungen sowie aus einem Rest an Massen% Cu besteht.

11. Verfahren nach einem der Ansprüche 7 bis 10, **dadurch gekennzeichnet, dass** die Schweißraupe (17) beim Auftragsschweißen wenigstens teilweise einem zick-zack Verlauf folgend aufgetragen wird.

12. Verfahren nach Anspruch 11, **dadurch gekennzeichnet, dass** beim Auftragsschweißen die Schweißraupe (17) mit der bereits aufgeschweißten Schweißraupe (17) überlappend, insbesondere mindestens 3 mm überlappend, aufgeschweißt wird.

13. Verwendung einer Rolle (1) mit einem Grundkörper (2) und einer auftragsgeschweißten, heterogenen und mehrphasigen Aluminiumbronze mit Al > 10 Massen% als einer die Rollfläche (4) der Rolle (1) ausbildende Schicht (3) zum Führen und/oder Abstützen eines Strangs (5) einer Stranggießanlage.

14. Verwendung nach Anspruch 13, **dadurch gekennzeichnet, dass** die Aluminiumbronze aus
| | |
|---|---|
| Al | 10 bis 14 Massen%, |
| Ni | bis 8 Massen%, vorzugsweise 3 bis 7 Massen%, |
| Fe | max. 5 Massen%, vorzugsweise max. 2 Massen%, |
| Mn | max. 2 Massen%, |
herstellungsbedingten Verunreinigungen sowie aus einem Rest an Massen% Cu besteht.

15. Verwendung nach Anspruch 14, **dadurch gekennzeichnet, dass** die Aluminiumbronze aus
| | |
|---|---|
| Al | 11,5 Massen%, |
| Ni | 4,8 Massen%, |
| Fe | 2 Massen%, |
| Mn | 1 Massen%, |
herstellungsbedingten Verunreinigungen sowie aus einem Rest an Massen% Cu besteht.

## Claims

1. A roller for guiding and/or supporting a strand (5) of a continuous casting plant having a base body (2) comprising an iron material and a layer (3) forming a rolling surface (4) for the strand (5), wherein the layer (3) is materially bonded to the base body (2) via a deposit-welded connection (6), **characterized in that** the layer (3) has a heterogeneous polyphase aluminum bronze, and that the heterogeneous polyphase aluminum bronze has Al > 10% by mass.

2. A roller according to claim 1, **characterized in that** the aluminum bronze has at least one further alloying element with regard to Cu and Al, more particularly Ni, Fe and/or Mn.

3. A roller according to claim 1 or 2, **characterized in that** the layer (3) has at least partially a recess (7) on its rolling surface (4), more particularly at least one groove (8) surrounding the rolling surface (4).

4. A roller according to one of the claims 1 to 3, **characterized in that** the base body (2) has a burn-in (10), which zigzags in an inclined manner in the direction of its running direction (9) and is adjoined by the layer (3).

5. A roller according to one of the claims 1 to 4, **characterized in that** the aluminum bronze consists of
Al 10 to 14% by mass,
Ni up to 8% by mass, preferably 3 to 7% by mass,
Fe max. 5% by mass, preferably max. 2% by mass,
Mn max. 2% by mass, impurities produced by the production process, and a remainder of % by mass of Cu.

6. A roller according to claim 5, **characterized in that** the aluminum bronze consists of
Al 11.5% by mass,
Ni 4.8% by mass
Fe 2% by mass,
Mn 1% by mass, impurities produced by the production process, and a remainder of % by mass of Cu.

7. A method for manufacturing or repairing a roller (1) according to one of the claims 1 to 6, in which a layer (3) is deposit-welded onto a base body (2) comprising a ferrous material, more particularly a steel material, by deposit welding with a welding material (15) which consists of a heterogeneous polyphase aluminum bronze, **characterized in that** a heterogeneous polyphase aluminum bronze with Al> 10% by mass as welding material (15) is deposit-welded.

8. A method according to claim 7, **characterized in that** the aluminum bronze, which is preferably multi-alloyed, more particularly additionally having at least one alloying element Ni, Fe and/or Mn, has an alloying proportion of Al greater than 10% by mass.

9. A method according to claim 7 or 8, **characterized in that** the welding material (15) consists of
Al 10 to 14% by mass,
Ni up to 8% by mass, preferably 3 to 7% by mass,
Fe max. 5% by mass, preferably max. 2% by mass,
Mn max. 2% by mass, impurities produced by the production process, and a remainder of % by mass of Cu.

10. A method according to claim 9, **characterized in that** the welding material (15) consists of
Al 11.5% by mass,
Ni 4.8% by mass
Fe 2% by mass,
Mn 1% by mass, impurities produced by the production process, and a remainder of % by mass of Cu.

11. A method according to one of the claims 7 to 10, **characterized in that** the welding bead (17) is applied during deposit welding by at least partially following a zigzag course.

12. A method according to claim 11, **characterized in that** during deposit welding, the welding bead (17) is welded over in an overlapping manner with the already welded welding bead (17), more particularly overlapping at least 3 mm.

13. Use of a roller (1) with a base body (2) and a deposit-welded, heterogeneous and polyphase aluminum bronze with Al> 10% by mass as a layer (3) forming the rolling surface (4) of the roller (1) for guiding and/or supporting a strand (5) of a continuous casting plant.

14. Use according to claim 13, **characterized in that** the aluminum bronze consists of
Al 10 to 14% by mass,
Ni up to 8% by mass, preferably 3 to 7% by mass,
Fe max. 5% by mass, preferably max. 2% by mass,
Mn max. 2% by mass, impurities produced by the production process, and a remainder of % by mass of Cu.

15. Use according to claim 14, **characterized in that** the aluminum bronze consists of
Al 11.5% by mass,
Ni 4.8% by mass
Fe 2% by mass,
Mn 1% by mass, impurities produced by the production process, and a remainder of % by mass of Cu.

## Revendications

1. Rouleau pour le guidage et/ou le soutien d'une barre de coulée (5) d'une installation de coulée continue avec un corps (2) comportant un matériau ferreux et avec une couche (3) formant une surface de roulement (4) pour la barre de coulée (5), dans lequel la couche (3) est reliée en solidarité de matière avec le corps (2) par une liaison par soudage de rechargement (6) avec le corps (2), **caractérisé en ce que** la couche (3) contient un bronze d'aluminium hétérogène à phases multiples et **en ce que** le bronze d'aluminium hétérogène à phases multiples contient > 10 % de la masse d'aluminium.

2. Rouleau selon la revendication 1, **caractérisé en ce que** le bronze d'aluminium présente, en plus du cuivre et de l'aluminium, au moins un autre élément d'alliage, en particulier Ni, Fe ou Mn.

3. Rouleau selon les revendications 1 ou 2, **caractérisé en ce que** la couche (3) présente au moins en partie un évidement (7) sur sa surface de roulement (4), en particulier au moins une rainure (8) faisant le tour de la surface de roulement (4).

4. Rouleau selon l'une des revendications 1 à 3, **caractérisé en ce que** le corps (2) présente un sillon (10) en zigzag oblique par rapport à son sens de roulement (9), auquel la couche (3) se raccorde.

5. Rouleau selon l'une des revendications 1 à 4, **caractérisé en ce que** le bronze d'aluminium se compose de
| | |
|---|---|
| Al | 10 à 14 % de la masse, |
| Ni | jusqu'à 8 % de la masse, de préférence 3 à 7 % de la masse, |
| Fe | max. 5 % de la masse, de préférence max. 2 % de la masse, |
| Mn | max. 2 % de la masse, |
d'impuretés liées à la fabrication et de cuivre pour le pourcentage restant de la masse.

6. Rouleau selon la revendication 5, **caractérisé en ce que** le bronze d'aluminium se compose de
| | |
|---|---|
| Al | 11,5 % de la masse |
| Ni | 4,8 % de la masse, |
| Fe | 2 % de la masse, |
| Mn | 1 % de la masse, |
d'impuretés liées à la fabrication et de cuivre pour le pourcentage restant de la masse.

7. Procédé pour la fabrication ou la réparation d'un rouleau (1) selon l'une des revendications 1 à 6, dans lequel une couche (3) est appliquée par soudage de rechargement sur un corps (2) comportant un matériau ferreux, en particulier un acier, par soudage de rechargement avec un matériau de soudage (15) qui se compose d'un bronze d'aluminium hétérogène à phases multiples, **caractérisé en ce qu'**un bronze d'aluminium hétérogène à phases multiples contenant >10 % de la masse d'aluminium est appliqué par rechargement comme matériau de soudage (15).

8. Procédé selon la revendication 7, **caractérisé en ce que** le bronze d'aluminium, de préférence en alliage à plusieurs constituants, en particulier présentant au moins un matériau d'alliage supplémentaire parmi Ni, Fe et/ou Mn, comporte une part d'aluminium dans l'alliage supérieure à 10 % de la masse.

9. Procédé selon la revendication 7 ou 8, **caractérisé en ce que** le matériau de soudage (15) se compose de
| | |
|---|---|
| Al | 10 à 14 % de la masse, |
| Ni | jusqu'à 8 % de la masse, de préférence 3 à 7 % de la masse, |
| Fe | max. 5 % de la masse, de préférence max. 2 % de la masse, |
| Mn | max. 2 % de la masse, |
d'impuretés liées à la fabrication et de cuivre pour le pourcentage restant de la masse.

10. Procédé selon la revendication 9, **caractérisé en ce que** le matériau de soudage (15) se compose de
| | |
|---|---|
| Al | 11,5 % de la masse, |
| Ni | 4,8 % de la masse, |
| Fe | 2 % de la masse, |
| Mn | 1 % de la masse, |
d'impuretés liées à la fabrication et de cuivre pour le pourcentage restant de la masse.

11. Procédé selon l'une des revendications 7 à 10, **caractérisé en ce que** le bourrelet de soudure (17) est appliqué au moins en partie en zigzag au cours de l'opération de soudage par rechargement.

12. Procédé selon la revendication 11, **caractérisé en ce que** lors du soudage par rechargement, le bourrelet de soudure (17) est appliqué en chevauchant le bourrelet de soudure (17) déjà formé, en particulier en le chevauchant d'au moins 3 mm.

13. Utilisation d'un rouleau (1) avec un corps (2) et un bronze d'aluminium hétérogène à phases multiples appliqué par soudage par rechargement, contenant >10 % de la masse d'aluminium, formant une couche (3) qui sert de surface de roulement (4) du rouleau (1) pour le guidage et/ou le soutien d'une barre de coulée (5) d'une installation de coulée continue.

14. Utilisation selon la revendication 13, **caractérisée en ce que** le bronze d'aluminium se compose de
| | |
|---|---|
| Al | 10 à 14 % de la masse, |
| Ni | jusqu'à 8 % de la masse, de préférence 3 à 7 % de la masse, |
| Fe | max. 5 % de la masse, de préférence max. 2 % de la masse, |
| Mn | max.2 % de la masse, |
d'impuretés liées à la fabrication et de cuivre pour le pourcentage restant de la masse.

15. Utilisation selon la revendication 14, **caractérisé en ce que** le bronze d'aluminium se compose de
| | |
|---|---|
| Al | 11,5 % de la masse, |
| Ni | 4,8 % de la masse, |
| Fe | 2 % de la masse, |
| Mn | 1 % de la masse, |
d'impuretés liées à la fabrication et de cuivre pour le pourcentage restant de la masse.
